# EUROPÄISCHE PATENTANMELDUNG

(11) **EP 4 261 502 A1**
(43) Veröffentlichungstag der Anmeldung: **18.10.2023**
(21) Anmeldenummer: 22168411.1
(22) Anmeldetag: 14.04.2022
(51) Int. Cl.: G01D 7/00, G01D 21/00

(54) **FELDGERÄT MIT KONTINUIERLICHER VISUALISIERUNG EINER PROZESSGRÖSSE, VERFAHREN ZUR ANZEIGE EINER PROZESSGRÖSSE**

(71) Anmelder: VEGA Grieshaber KG, 77709 Wolfach (DE)
(72) Erfinder: Wöhrle, Matthias, 77793 Gutach (DE); Schätzle, Benjamin, 77756 Hausach (DE)
(74) Vertreter: Patentanwälte Bauer Vorberg Kayser

(57) **Zusammenfassung**

Die Erfindung betrifft ein Feldgerät (10) mit einer Sensoreinheit (18) zur Erfassung einer Prozessgröße und mit mindestens einer optischen Anzeige (22), wobei die optische Anzeige (22) mindestens eine Lichtquelle (26) aufweist.

Mittels des Feldgerätes sollen Informationen über eine ermittelte Prozessgröße schnell und intuitiv vor Ort erfassbar sein.

Dazu ist die optische Anzeige (22) dazu eingerichtet, die Prozessgröße quantitativ über ein kontinuierliches Farbspektrum und/oder ein kontinuierliches Helligkeitsspektrum zu visualisieren.

Die Erfindung betrifft ferner ein Verfahren zur Anzeige mindestens einer Prozessgröße.

## Beschreibung

Die Erfindung betrifft ein Feldgerät gemäß Patentanspruch 1 und ein Verfahren zur Anzeige mindestens einer Prozessgröße gemäß Patentanspruch 8.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensorelementen, die die entsprechenden Prozessgrößen Füllstand, Grenzstand oder Druck oder auch davon abgeleitete Prozessgrößen erfassen. Häufig sind solche Feldgeräte mit übergeordneten Einheiten, zum Beispiel Leitsystemen oder Steuereinheiten, verbunden. Diese übergeordneten Einheiten dienen zur Prozesssteuerung, Prozessvisualisierung und/oder Prozessüberwachung. Die aus dem Stand der Technik bekannten Feldgeräte weisen in der Regel ein Gehäuse, eine Sensoreinheit und ein in dem Gehäuse angeordnetes Elektronikmodul auf. Die gemessenen Prozessgrößen werden üblicherweise ausgewertet und dessen Ergebnisse können beispielsweise zur Erzeugung eines Schaltbefehls und/oder einer proportionalen analogen oder digitalen Ausgangsgröße oder zur Anzeige von physikalischen Eigenschaften oder Prozessgrößen genutzt werden.

Um z.B. den Betriebszustand der Feldgeräte auch aus der Ferne an dem Gerät selbst zu erkennen, besitzen solche Feldgeräte oft eine optische Anzeige, beispielsweise eine LED. Beispielsweise kann bei einem Grenzstandsensor der Schaltzustand angezeigt werden, wobei die Farbe einer LED den Schaltzustand wiedergeben:
- Grün: unbedeckt
- Gelb: bedeckt
- Rot: Störung

Die zugrundliegende Aufgabe der Erfindung ist es, ein Feldgerät und ein Verfahren zur Verfügung zu stellen, mittels welchem Informationen über eine ermittelte Prozessgröße schnell und intuitiv vor Ort erfassbar sind.

Die Lösung der Aufgabe erfolgt erfindungsgemäß mit den Merkmalen der unabhängigen Ansprüche. Weitere Ausführungsformen und Vorteile sind in Zusammenhang mit den abhängigen Ansprüchen beschrieben.

Ein erfindungsgemäßes Feldgerät umfasst mindestens eine Sensoreinheit zur Erfassung einer Prozessgröße. Die Sensoreinheit ist insbesondere dazu ausgelegt eine oder mehrere Prozessgrößen zu bestimmen. So können z.B. aus einem Messwert in Verbindung mit weiteren (konstanten) Parametern auch mehrere Prozessgrößen abgeleitet werden. Die Sensoreinheit kann auch dazu ausgelegt sein, mittels verschiedener Messmethoden (z.B. induktiv und konduktiv) mehrere Prozessgrößen zu erfassen.

Das Feldgerät weist mindestens eine optische Anzeige auf, die mindestens eine Lichtquelle aufweist. Als Lichtquelle dient insbesondere eine LED. Insbesondere weist die optische Anzeige mehrere Lichtquellen auf. Die Lichtquellen weisen dann vorzugsweise unterschiedliche Farben auf. Bei mehreren Lichtquellen oder LEDs unterschiedlicher Farbe, können diese auch in einem gemeinsamen Gehäuse angeordnet sein.

Die optische Anzeige ist dazu eingerichtet, die ermittelte Prozessgröße quantitativ über ein kontinuierlich veränderbares Farbspektrum und/oder Helligkeitsspektrum zu visualisieren. Ein kontinuierliches Farbspektrum bedeutet hierbei, dass die Lichtfarbe zwischen zwei Farbpunkten durch additive Farbmischung unterschiedlicher Lichtquellen kontinuierlich verändert werden kann. So können insbesondere drei LEDs in den Grundfarben Rot, Grün und Blau vorgesehen sein und durch die jeweiligen Mischungsanteile können zwischen den Farben der Lichtquellen liegende Farben eingestellt werden.

Alternativ oder in Ergänzung dazu, ist die optische Anzeige dazu eingerichtet, die Helligkeit bzw. die Intensität kontinuierlich zwischen einer maximalen Intensität und einer minimalen Intensität korrespondierend zur Prozessgröße einzustellen.

Ein Beispiel ist ein Feldgerät, welches ermöglicht eine Dichte eines Mediums als Prozessgröße zu ermitteln, so kann die maximal zulässige Dichte einer roten Farbe zugeordnet werden und die minimal zulässige Dichte einer grünen Farbe. Die dazwischenliegenden Dichten werden dann gleichmäßig mit den zwischen rot und grün liegenden Farben bzw. durch die Addition und Subtraktion der Farben visualisiert.

Die kontinuierliche Anzeige ermöglicht es einem Anwender, mit einem Blick auf das Feldgerät den Wert der relevanten Prozessgröße genau zu erfassen. Im Gegensatz zu einer optischen Anzeige, die nur den Wert einer Prozessgröße als Zahl anzeigt oder eine optische Anzeige, die den Wert einer Prozessgröße nur segmentweise oder intervallweise anzeigt, bietet das erfindungsgemäße Feldgerät mit einer optischen Anzeige mit kontinuierlich ändernde Farbe und/oder Helligkeit, den Vorteil, den Zustand der Prozessgröße genau und intuitiv zu erfassen. Die optische Anzeige hat einen besonders hohen Informationsgehalt. Der Anwender sieht unmittelbar, wie sich die Prozessgröße verhält, und ob der überwachte Prozess wie vorgesehen verläuft.

Insbesondere handelt es sich bei dem Feldgerät um einen Füllstandsensor, einen Grenzstandsensor oder einen Drucksensor. Das Feldgerät dient insbesondere dazu die Eigenschaft bzw. Prozessgröße von Medien, wie Flüssigkeiten oder auch Schüttgütern in einem Behälter oder Rohr zu überwachen.

Als Prozessgrößen kann insbesondere einer oder mehrere der folgenden erfasst werden: ein Füllstand, ein Grenzstand, eine Leitfähigkeit eines Mediums, eine Dielektrizitätskonstante eines Mediums, ein Bedeckungsgrad, eine Anhaftungsdicke eines Mediums, eine Dichte eines Mediums, eine Viskosität eines Mediums und/oder ein Druck.

Insbesondere ist die optische Einheit dazu ausgelegt, eine erste Prozessgröße über ein kontinuierliches Farbspektrum zu visualisieren und eine zweite Prozessgröße über ein kontinuierliches Helligkeitsspektrum. Damit können besonders viele Informationen kompakt über eine optische Einheit vermittelt werden.

In einer praktischen Ausführungsform des Feldgerätes ist zusätzlich mit der optischen Anzeige der Betriebszustand des Feldgerätes anzeigbar. Es ist dann möglich, über das kontinuierliche Farb- und/oder Helligkeitsspektrum die Prozessgröße quantitativ zu visualisieren und zusätzlich den Betriebszustand als Information anzuzeigen. Praktisch könnte dies so aussehen, dass bei einem Grenzstandsensor, der unbedeckt ist, als Grundfarbe grün ausgewählt ist und über die Helligkeit der Lichtquelle die Dichte angezeigt wird. Alternativ könnte z.B. in unbedecktem Zustand jeweils ein Farbverlauf für die Dichte angezeigt werden und nur im Falle eines bedeckten Zustandes, die Lichtquelle auf orange schalten. Auch eine jeweils abwechselnde Anzeige von Betriebszustand und Visualisierung der Prozessgröße könnte durch die optische Anzeige ermöglicht werden.

Insbesondere zeigt die optische Anzeige, wie vorstehend schon skizziert, je nach Betriebszustand des Feldgerätes eine andere Farbe an. Diese kann insbesondere alternierend mit einem Farbverlauf für die Prozessgröße oder überlagert zu einem Helligkeitsverlauf angezeigt werden.

Das Feldgerät weist insbesondere mehrere optische Anzeigen zur kontinuierlichen Visualisierung einer Prozessgröße auf. So können gleichzeitig mehrere Prozessgrößen an dem Feldgerät dargestellt und auf einen Blick erfasst werden. Eine optische Anzeige kann alternativ oder zusätzlich auch zur Anzeige Betriebszustand des Feldgerätes dienen.

Die Erfindung betrifft auch ein Verfahren zur Anzeige mindestens einer Prozessgröße, wobei von einem Feldgerät mittels einer Sensoreinheit mindestens eine Prozessgröße eines Mediums erfasst wird und anschließend ein zu der erfassten Prozessgröße korrespondierender Farbwert in einem kontinuierlichen Farbspektrum und/oder ein korrespondierender Helligkeitswert auf einem kontinuierlichen Farbspektrum an einer optischen Anzeige eingestellt wird.

Wie vorstehend bereits erläutert, ermöglicht das Verfahren aufgrund der kontinuierlichen Visualisierung der Prozessgröße mittels Farbe oder Helligkeit die Vermittlung eines hohen Informationsgehaltes, der gleichzeitig schnell und intuitiv erfassbar ist.

In einer praktischen Ausführungsform des Verfahrens wird eine erste Prozessgröße über ein kontinuierliches Farbspektrum visualisiert und eine zweite Prozessgröße wird über ein kontinuierliches Helligkeitsspektrum visualisiert. Somit können mit nur einer Anzeige mehrere Prozessgrößen gleichzeitig dargestellt werden.

Alternativ oder in Ergänzung dazu, kann mittels der optischen Anzeige auch ein Betriebszustand eines Feldgerätes visualisiert werden.

Weitere praktische Ausführungsformen und Vorteile sind nachfolgend in Zusammenhang mit der Figur beschrieben. Es zeigt:

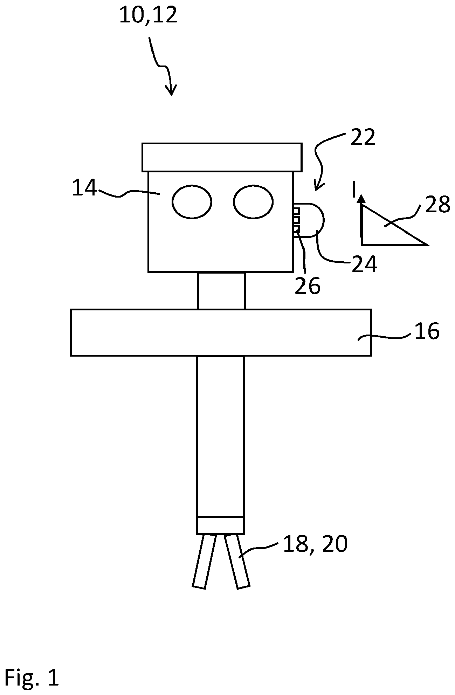

- Fig. 1:: ein Feldgerät mit einer optischen Anzeige in einer schematischen Darstellung.

In Fig. 1 ist ein Feldgerät 10 dargestellt. Dabei handelt es sich hier um einen Grenzstandsensor 12. Der Grenzstandsensor 12 weist ein Gehäuse 14, einen Prozessanschluss 16 und eine Sensoreinheit 18 zur Erfassung einer Prozessgröße auf. Hier handelt es sich um einen vibronischen Grenzstandsensor 12, welcher als Sensoreinheit 18 eine Schwinggabel 20 aufweist.

Ferner weist das Feldgerät 10 eine optische Anzeige 22 auf. Die optische Anzeige 22 ist hier schematisch dargestellt und umfasst ein Gehäuse 24. Die optische Anzeige 22 weist hier drei Lichtquellen 26 in Form von LEDs auf. Die drei Lichtquellen 26 sind hier gemeinsam in dem Gehäuse 24 angeordnet. Die LEDs 26 weisen die Farben rot, grün und blau auf. Es wird darauf hingewiesen, dass die optische Anzeige 22 hier nur exemplarisch dargestellt ist, die Form, Größe und Position der optischen Anzeige kann auch anders ausgestaltet sein. Die optische Anzeige 22 kann auch andere Lichtquellen 26 oder eine andere Anzahl an Lichtquellen 26 aufweisen.

Die optische Anzeige 22 ist hier dazu eingerichtet, die Prozessgröße qualitativ zu visualisieren. Dazu kann die optische Anzeige 22 die Prozessgröße in einem kontinuierlichen Farbspektrum und/oder in einen kontinuierlichen Helligkeitsspektrum anzeigen.

Ein entsprechendes Intensitätsspektrum 28 ist neben der optischen Anzeige 22 schematisch dargestellt. Jegliche Intensitäten zwischen einer maximalen Intensität und keiner Intensität sind von der optischen Anzeige 22 einstellbar. Analoges gilt für ein Farbspektrum, wobei jegliche Farben zwischen zwei oder mehreren Farbpunkten kontinuierlich, korrespondierend zu der Prozessgröße einstellbar sind.

Der gezeigte vibronische Grenzstandsensor 12 dient insbesondere zur Grenzstanderfassung von Flüssigkeiten, zum Beispiel als Trockenlaufschutz. Mittels dieses Grenzstandsensors 12 können neben dem Betriebszustand bedeckt/unbedeckt, auch die Prozessgrößen Dichte und die Viskosität einer Flüssigkeit ermittelt werden. Mittels der optischen Anzeige 22 ist es möglich diese beiden Prozessgrößen jeweils als kontinuierliches Farbspektrum oder als kontinuierliches Helligkeitsspektrum optisch darzustellen. So können direkt mit einem Blick auf das Feldgerät 10 präzise Informationen über die Prozessgröße erhalten werden.

Bei einem anderen Feldgerät 10 in Form eines Grenzstandsensors 12 (hier nicht gezeigt), welcher dazu ausgebildet ist, den Grenzstand sowohl kapazitiv als auch konduktiv zu ermitteln, kann sowohl die Leitfähigkeit eines Mediums als auch dessen Dielektrizitätskonstante ermittelt werden. Davon abgeleitet kann weiterhin ein Bedeckungsgrad oder eine Anhaftungsdicke ermittelt werden. Es ist nun möglich jede dieser Prozessgrößen als kontinuierliches Farbspektrum mittels der optischen Anzeige 22 anzuzeigen. Es ist daher mit einem Blick auf das Feldgerät direkt ersichtlich, wie hoch beispielweise die Dielektrizitätskonstante eines Mediums ist, oder aber wie viel Anhaftung am Sensor vorhanden ist.

Weiterhin ist es denkbar, dass bei solchen Grenzstandsensoren 12 zunächst den Betriebszustand bedeckt/unbedeckt sequenziell als Farbe und anschließend die Prozessgröße als Farbe oder Helligkeit anzuzeigen. Für die binäre Information des Betriebszustandes, sind dann feste Farben vordefiniert, während für die Prozessgröße das kontinuierliche Farbspektrum angewendet wird. Ebenso ist es denkbar diese beiden Informationen parallel über zwei optische Anzeigen auszugeben.

### Bezugszeichenliste

- 10: Feldgerät
- 12: Grenzstandsensor
- 14: Gehäuse
- 16: Prozessanschluss
- 18: Sensoreinheit
- 20: Schwinggabel
- 22: optische Anzeige
- 24: Gehäuse
- 26: Lichtquelle
- 28: Helligkeitsspektrum/Intensitätsspektrum

## Patentansprüche

1. Feldgerät mit einer Sensoreinheit (18) zur Erfassung einer Prozessgröße und mit mindestens einer optischen Anzeige (22), wobei die optische Anzeige (22) mindestens eine Lichtquelle (26) aufweist,
**dadurch gekennzeichnet, dass**
die optische Anzeige (22) dazu eingerichtet ist, die Prozessgröße quantitativ über ein kontinuierliches Farbspektrum und/oder ein kontinuierliches Helligkeitsspektrum zu visualisieren.

2. Feldgerät nach dem vorstehenden Anspruch,
**dadurch gekennzeichnet, dass**
es sich bei dem Feldgerät (10) um einen Füllstandsensor, einen Grenzstandsensor (12) oder einen Drucksensor handelt.

3. Feldgerät nach einem der vorstehenden Ansprüche,
**dadurch gekennzeichnet, dass**
die Prozessgröße ein Füllstand, ein Grenzstand, eine Leitfähigkeit eines Mediums, eine Dielektrizitätskonstante eines Mediums, ein Bedeckungsgrad, eine Anhaftungsdicke eines Mediums, eine Dichte eines Mediums, eine Viskosität eines Mediums oder ein Druck ist.

4. Feldgerät nach einem der vorstehenden Ansprüche,
**dadurch gekennzeichnet, dass**
die optische Einheit (22) dazu ausgelegt ist, eine erste Prozessgröße über ein kontinuierliches Farbspektrum zu visualisieren und eine zweite Prozessgröße über ein kontinuierliches Helligkeitsspektrum.

5. Feldgerät nach einem der vorstehenden Ansprüche,
**dadurch gekennzeichnet, dass**
zusätzlich mit der optischen Anzeige (22) der Betriebszustand des Feldgerätes (10) anzeigbar ist.

6. Feldgerät nach dem vorstehenden Anspruch,
**dadurch gekennzeichnet, dass**
die optische Anzeige je nach Betriebszustand des Feldgerätes eine andere Farbe anzeigt.

7. Feldgerät nach einem der vorstehenden Ansprüche,
**dadurch gekennzeichnet, dass**
das Feldgerät (10) mehrere optische Anzeigen (22) zur kontinuierlichen Visualisierung mehrerer Prozessgrößen und/oder zur Anzeige eines Betriebszustandes des Feldgerätes (10) aufweist.

8. Verfahren zur Anzeige mindestens einer Prozessgröße, wobei von einem Feldgerät (10) mittels einer Sensoreinheit (18) mindestens eine Prozessgröße eines Mediums erfasst wird und anschließend ein zu der erfassten Prozessgröße korrespondierender Farbwert in einem kontinuierlichen Farbspektrum und/oder ein korrespondierender Helligkeitswert in einem kontinuierlichen Helligkeitsspektrum eingestellt wird.

9. Verfahren nach dem vorstehenden Anspruch,
**dadurch gekennzeichnet, dass**
eine erste Prozessgröße über eine kontinuierliches Farbspektrum visualisiert wird und eine zweite Prozessgröße über ein kontinuierliches Helligkeitsspektrum.
